# EUROPÄISCHE PATENTSCHRIFT

(11) **EP 0 399 621 B1**
(45) Veröffentlichungstag und Bekanntmachung des Hinweises auf die Patenterteilung: **08.12.1993**
(21) Anmeldenummer: 90201324.2
(22) Anmeldetag: 25.05.1990
(51) Int. Cl.: C04B 37/02, H01J 35/10

(54) **Verbundkörper aus Graphit und hochschmelzendem Metall**
Graphite-refractory metal composite
Composite de graphite et d'un métal à haut point de fusion

(30) Priorität: 26.05.1989 AT 1271/89
(43) Veröffentlichungstag der Anmeldung: 28.11.1990
(73) Patentinhaber: METALLWERK PLANSEE GESELLSCHAFT M.B.H., 6600 Reutte, Tirol (AT)
(72) Erfinder: Rödhammer, Peter, Dr., A-6600 Reutte/Tirol (AT); Kailer, Harl-Heinz, A-6600 Breitenwang (AT)
(74) Vertreter: Lohnert, Wolfgang, Dr.

(56) Entgegenhaltungen:
- EP-A- 0 023 065
- EP-A- 0 273 161
- EP-A- 0 305 547
- US-A- 4 482 837
- US-A- 4 777 643
- PATENT ABSTRACTS OF JAPAN vol. 8, no. 231 (E-274)(1668) 02 Juli 1984, & JP-A-59 114739 (TOSHIBA K.K.) 22 Dezember 1982,

## Beschreibung

Die Erfindung betrifft einen Verbundkörper aus Graphit, aus einer karbidbildenden hochschmelzenden Metallkomponente und aus einer mehrlagigen, mittels eines Beschichtungsverfahrens auf dem Graphit aufgebrachten Zwischenschicht, wobei die an den Graphit angrenzende erste Lage der Zwischenschicht aus einem kein Karbid bildenden Metall oder dessen Legierungen besteht.

Für eine Reihe von Hochtemperaturanwendungen haben sich anstelle hochschmelzender Metalle alleine Werkstoffverbunde aus Graphit und hochschmelzenden Metallen durchgesetzt, die gegenüber einkomponentigen Werkstoffen aus hochschmelzenden Metallen, insbesondere aufgrund der besseren Wärmespeicherfähigkeit und aufgrund des geringeren spezifischen Gewichtes von Graphit, erweiterte Hochtemperaturanwendungen ermöglichen.

Eine wichtige Anwendung, bei der die Vorteile derartiger Werkstoffverbunde zum Tragen kommen, sind Drehanoden für Röntgenröhren.

Entscheidend für die Brauchbarkeit von Werkstoffverbunden aus Graphit und hochschmelzenden Metallen ist eine gute hochtemperaturfeste Verbindung zwischen Graphit und hochschmelzendem Metall. Insbesondere bei Einsatzfällen, bei denen Wärme aus dem hochschmelzenden Metall rasch abgeführt werden soll, wie z. B. bei Drehanoden, sollte die Verbindung zwischen hochschmelzendem Metall und Graphit ausreichend gut wärmeleitend sein, um das hohe Wärmespeichervermögen des Graphits voll ausnützen zu können. Darüberhinaus sollte bei der Verwendung karbidbildender hochschmelzender Metalle bei den hohen Einsatztemperaturen möglichst wenig Kohlenstoff aus dem Graphit in das hochschmelzende Metall diffundieren, um eine Karbidbildung des hochschmelzenden Metalles zu vermeiden. Eine Karbidbildung würde zu einer Versprödung und damit zu einer Verschlechterung der thermischen Belastbarkeit und Thermoschockbeständigkeit des Verbundkörpers führen sowie die gute Wärmeleitfähigkeit des karbidbildenden hochschmelzenden Metalles selbst verschlechtern.

Bei einer Vielzahl von Anwendungsfällen sind verschiedene Ausführungen von Verbundkörpern aus Graphit und karbidbildenden hochschmelzenden Metallen bekannt. Eine mögliche Ausführungsform ist ein massiver Grundkörper aus Graphit, der mit einer dünnen Beschichtung in der Größenordnung von bis zu 1000µm aus karbidbildendem hochschmelzendem Metall verbunden ist. Da bei einem direkten Aufbringen der Schicht aus karbidbildendem hochschmelzendem Metall auf den Graphit bei den im allgemeinen im Betrieb auftretenden hohen Temperaturen das karbidbildende hochschmelzende Metall durch Diffusion von Kohlenstoff aus dem Graphit in ein Karbid umgewandelt werden würde, ist die Anordnung einer ein- oder mehrlagigen Zwischenschicht zwischen Graphit und karbidbildendem hochschmelzendem Metall, die eine Barriere für die Kohlenstoff-Diffusion darstellt, notwendig und bekannt. Zwischenschicht und Deckschicht aus karbidbildendem hochschmelzendem Metall werden dabei in der Regel durch spezielle Beschichtungsverfahren, z. B. CVD- oder PVD-Verfahren, auf dem Graphit aufgebracht.

So wurde beispielsweise bereits vorgeschlagen, zwischen einem Grundkörper aus Graphit und einer Wolframschicht eine einlagige Zwischenschicht aus Tantal anzuordnen. Die Tantalschicht wird bei den hohen Einsatztemperaturen des Verbundkörpers durch Kohlenstoff-Diffusion aus dem Graphit in Tantalkarbid umgewandelt und bildet dann eine Diffusionsbarriere für eine weitere Diffusion des Kohlenstoffs in die Wolframschicht. Um auch bei extremen Einsatzbedingungen im Hinblick auf Temperatur und Zeit eine Karburierung der Wolframschicht sicher zu vermeiden, muß die Zwischenschicht ausreichend dick sein. Da sich jedoch bei größeren Schichtdicken die Sprödigkeit des Tantalkarbids und die unterschiedlichen thermischen Ausdehnungskoeffizienten der einzelnen Materialien stark auswirken, kommt es vielfach, insbesondere bei Thermoschockbelastungen des Verbundkörpers, zu einer Ablösung des Schichtverbundes vom Graphitgrundkörper.

Entsprechend der DE-OS 22 63 820 wird am Beispiel einer Drehanode mit einem Grundkörper aus Graphit und einer Brennbahnschicht aus karbidbildendem hochschmelzendem Metall, z. B. Wolfram, die Anordnung einer zweilagigen Zwischenschicht beschrieben. Die unmittelbar auf dem Graphit angeordnete Lage der Zwischenschicht besteht aus einem kein Karbid bildenden Metall, genannt sind Iridium, Osmium oder Ruthenium, während die zweite Lage der Zwischenschicht aus einem karbidbildenden hochschmelzenden Metall, wie Hafnium, Niob, Tantal oder Zirkon, besteht. Damit soll erreicht werden, daß die durch Kohlenstoff-Diffusion aus dem Graphit bei der Betriebstemperatur der Drehanode in ein sprödes Karbid übergeführte zweite Lage über eine metallische und damit plastische Schicht mit dem Graphitkörper verbunden ist. Durch die Plastizität dieser metallischen Schicht sollen Ausdehnungsunterschiede der einzelnen Materialien bei thermischer Belastung ausgeglichen und damit eine gute Haftung der Brennbahnschicht am Graphitkörper erreicht werden. In der Praxis kommt es jedoch auch trotz einer derartigen Zwischenschicht im Laufe der Zeit zu einer langsamen, aber stetig fortschreitenden Karburierung der Brennbahn und damit zu einem frühzeitigen Ausfall derartiger Drehanoden durch Ablösung großflächiger Teile der Brennbahn vom Graphit oder Absplitterung von Partikeln aus der Brennbahn.

Die EP-PS 0 023 065 beschreibt eine Drehanode für Röntgenröhren aus einem massiven Graphitgrundkörper und einer dünnen Brennbahn aus hochschmelzendem Metall, die über eine dreilagige Zwischenschicht auf dem Graphitgrundkörper aufgebracht ist. Die an den Grundkörper und an die Brennbahn angrenzenden Lagen der Zwischenschicht bestehen aus reinem Rhenium. Zwischen diesen Lagen ist eine weitere Lage aus einer Legierung von Rhenium mit mindestens einem karbidbildenden Metall, wie Wolfram, Tantal oder Hafnium angeordnet. Nachteilig bei einer derartigen Ausführung einer Drehanode ist, daß es bei den bei der Aufbringung der Beschichtung oder im Betrieb auftretenden Temperaturen in derjenigen Lage, die aus der Legierung von Rhenium mit dem karbidbildenden Metall besteht, zu einer Verbindungsbildung in Form einer spröden Phase, im Falle von Wolfram-Rhenium der sogenannten Sigma-Phase kommt, die zudem noch eine sehr nachteilige, in bezug auf reines Wolfram stark herabgesetzte Wärmeleitfähigkeit besitzt. Da sich diese Phase nach längerem Einsatz über die gesamte Lagendicke erstreckt, kommt es auch bei derartigen Drehanoden zu einem frühzeitigen Ausfall durch mechanisches oder thermisches Versagen der Brennbahn.

Aus der JP-A 59-114739 ist eine Drehanode für Röntgenröhren bekannt, bei der zwischen Graphitgrundkörper und Target aus hochschmelzendem Metall eine dreilagige Zwischenschicht aus einer ersten Lage Rhenium, einer zweiten Lage aus einem Karbid, z. B. Molybdänkarbid, und einer dritten Lage wiederum aus Rhenium, angeordnet ist. Die Rheniumschicht der ersten Lage und die Karbidschicht der zweiten Lage werden aus der Gasphase am Graphitgrundkörper abgeschieden. Die Rheniumschicht der dritten Lage wird durch eine Folie gebildet, die zur Herstellung des Verbundkörpers zwischen dem beschichteten Grundkörper und dem Target eingelegt wird. Auch durch einen derartigen Aufbau der Zwischenschicht kann die Karburierung der Brennbahn nicht vollständig verhindert werden.

Eine andere bekannte Ausführungsform eines Verbundkörpers besteht aus einem massiven Grundkörper aus Graphit und einem massiven Teil aus karbidbildendem hochschmelzendem Metall, das wiederum über eine oder mehrere Zwischenlagen mit dem Grundkörper verlötet oder durch Diffusionsschweißen verbunden ist.

In den meisten Fällen werden Verbundkörper aus einem massiven Grundkörper aus Graphit und einem massiven Teil aus karbidbildendem hochschmelzendem Metall dadurch hergestellt, daß das Lot bzw. Verbindungsmaterial ohne weitere Zwischenschicht zwischen den beiden Teilen angeordnet wird und die Teile durch Erschmelzen des Lotes oder durch Heißpressen miteinander verbunden werden. Derartige Ausführungsformen sind beispielsweise in der DE-B-12 25 023, EP-B-0 037 956, DE-B-21 15 896 oder DE-C-27 48 566 beschrieben. Nachteilig bei derartigen Verbundkörpern ist, daß es zumindest teilweise auch zu einer Karburierung des Lotmaterials mit all den oben beschriebenen negativen Folgeerscheinungen kommen kann oder daß verhältnismäßig dicke Schichten eines kein Karbid bildenden Materials, wie Rhenium, verwendet werden müssen, um eine Karbidbildung im hochschmelzenden Metallteil sicher auszuschließen. Dies ist jedoch wiederum aus Kostengründen vielfach nicht vertretbar. Darüberhinaus kann es beim Löten oder Heißpressen zu einem Entgasen des Graphits kommen, wodurch nachteilige Lunkerbildungen in der Zwischenschicht begünstigt werden.

Die US-A-4 777 643 beschreibt eine Drehanode aus einem Graphitgrundkörper und einem die Brennbahn tragenden Teil aus hochschmelzendem Metall, bei der die beiden Teile über eine Diffusionsverbindung zusammengefügt sind. Um eine Karbidbildung im hochschmelzenden Teil möglichst zu vermeiden, werden die Teile unter Verwendung einer Zwischenlage aus Platin oder einer Platinlegierung und einer Zwischenlage aus Tantal oder Niob oder Legierungen davon miteinander verbunden. Doch auch diese Ausführung wird nicht allen Anforderungen in einem ausreichenden Ausmaß gerecht.

Die Abscheidung von reinen Rhenium- bzw. rheniumhaltigen Schichten aus der Gasphase bei Drehanoden ist seit langem bekannt und wird beispielsweise in der DE-B-11 06 429 oder in der AT-B-278 184 beschrieben.

Die Aufgabe der vorliegenden Erfindung besteht darin, einen Verbundkörper aus Graphit und einer karbidbildenden hochschmelzenden Metallkomponente, unter Verwendung einer möglichst dünnen, mehrlagigen Zwischenschicht zu schaffen, bei dem es selbst bei langandauernd sehr hohen Betriebstemperaturen von bis zu 1350°C im Bereich der Zwischenschicht zu keiner störenden Rißbildung in der Zwischenschicht und vor allem zu keiner Zerstörung des Verbundes durch Delamination kommt, und bei dem eine die Lebensdauer des Verbundkörpers beeinträchtigende Karburierung der karbidbildenden hochschmelzenden Metallkomponente mit Sicherheit ausgeschlossen wird. Darüberhinaus soll für den Fall der Herstellung eines Verbundkörpers aus massiven Teilen aus Graphit und karbidbildenden hochschmelzenden Metallen durch Löten, ein Entgasen des Graphits in die Lötzone und damit eine nachteilige Lunkerbildung im Lot ausgeschlossen werden.

Erfindungsgemäß wird dies dadurch erreicht, daß anschließend an die an den Graphit angrenzende erste Lage der Zwischenschicht mindestens zwei Doppellagen angeordnet sind, wobei eine Doppellage aus einer Lage aus einem oder mehreren karbidbildenden Metallen bzw. aus deren Karbiden oder Mischkarbiden und einer Lage aus einem kein Karbid bildenden Metall oder dessen Legierungen besteht, und die Lagen aus einem kein Karbid bildenden Metall oder dessen Legierungen und aus einem oder mehreren Karbid bildenden Metallen bzw. deren Karbiden oder Mischkarbiden abwechselnd angeordnet sind.

Die kein Karbid bildenden Metalle sind vorzugsweise Rhenium oder Platin. Die Karbid bildenden Metalle sind vorzugsweise Wolfram, Tantal, Hafnium oder Niob.

Um die Kohlenstoff-Diffusion aus dem Graphit in die hochschmelzende Metallkomponente zu vermeiden, war es nach dem Stand der Technik bisher für ausreichend befunden worden, bei den mehrlagigen Zwischenschichten gegebenenfalls neben einer oder mehreren Lagen aus einem kein Karbid bildenden Metall in der Regel nur eine Lage aus einem Karbid oder karbidbildenden Metall anzuordnen. Um die Kohlenstoff-Diffusion möglichst vollständig zu verhindern, war man gezwungen, die Dicke der Zwischenschicht, insbesondere der Karbidschicht oder karbidbildenden Schicht so groß als möglich zu wählen, was aufgrund der verhältnismäßig schlechten Wärmeleitfähigkeit der Karbidschicht wiederum mit Nachteilen hinsichtlich der guten Wärmeleitfähigkeit zwischen Graphit und hochschmelzender Metallkomponente verbunden war. Aufgrund der Sprödigkeit der karbidischen Lage der Zwischenschicht kommt es bei großen Schichtdicken darüberhinaus zu einer verschlechterten Thermoschock-Belastbarkeit des Verbundkörpers.

Die völlig überraschende Erkenntnis die der Erfindung zugrunde liegt ist die Tatsache, daß bei etwa gleichbleibender Gesamtdicke der Zwischenschicht die Vermeidung der Karburierung der hochschmelzenden Metallkomponente noch effektiver ist, wenn bei der Zwischenschicht die Karbidschicht oder die Schicht aus karbidbildendem Metall nicht in einer einzigen Lage, sondern in mehreren Lagen, die jeweils durch eine Lage aus einem kein Karbid bildenden Metall voneinander getrennt sind, angeordnet wird. Dies gilt insbesondere auch dann, wenn die Gesamtdicke der karbidischen bzw. karbidbildenden Einzellagen nicht größer ist als die Dicke der karbidischen bzw. karbidbildenden Schicht bei einer einlagigen Anordnung dieser Schicht nach dem Stand der Technik.

Durch das Einbringen mehrerer Lagen aus karbidbildenden Metallen bzw. aus deren Karbiden ohne Anteil eines kein Karbid bildenden Metalles (im Unterschied zu EP-PS 0 023 065), wird aufgrund der gemäß Erfindung zusammenhängenden, also nicht skelettartigen Karbidschicht die Kohlenstoff-Diffusion vom Grundkörper in die karbidbildende hochschmelzende Metallkomponente gegenüber dem Stand der Technik nochmals wesentlich zuverlässiger unterbunden. Darüberhinaus beschränkt sich die Ausbildung einer intermetallischen Phase in der Zwischenschicht aufgrund des erfindungsgemäßen Schichtaufbaues auf die jeweils sehr dünnen Zonen zwischen dem karbidbildenden Metall und dem kein Karbid bildenden Metall, unmittelbar an der Grenzfläche, so daß die Nachteile dieser als massive Körper spröden Phasen weitgehend ausgeschlossen sind (Duktilisierung durch Sandwich-Aufbau). Die zur Erzielung der ausreichenden Sperrwirkung zur Verhinderung der Kohlenstoff-Diffusion notwendigen Lagen- bzw. Schichtstärken sind so niedrig, daß bei den für eine Fertigung üblichen Ausführungen eines erfindungsgemäßen Verbundkörpers keine signifikante Erhöhung des Wärmewiderstandes auftritt.

Die Sperrfunktion zur Verhinderung der Kohlenstoff-Diffusion wird durch einen Kombinationseffekt der nicht karbidbildenden Lagen sowie der karburierten Lagen des karbidbildenden Metalles in der Zwischenschicht erreicht. Diese karburierten Lagen können so hergestellt werden, daß sie schon bei der Abscheidung in Form von Karbiden aufgebracht werden oder daß vorerst nur das karbidbildende Metall aufgebracht wird, das dann im Zuge einer gezielten Glühbehandlung in das entsprechende Karbid umgewandelt wird. Ebenso ist es aber auch denkbar, den Verbundkörper mit Zwischenschichten aus den karbidbildenden Metallen auszuliefern, die dann erst beim bzw. unmittelbar vor dem Einsatz bei den hohen Betriebstemperaturen automatisch in die entsprechenden Karbidschichten umgewandelt werden.

Bei gleicher Gesamtdicke der Zwischenschicht ist die Diffusions-Sperrwirkung um so größer, je größer die Anzahl der einzelnen Lagen bzw. Doppellagen der Zwischenschicht ist. Diese Steigerung der Sperrwirkung wird in einem gegenüber dem Stand der Technik überraschend hohen Maß vermutlich dadurch erzielt, daß, vom Graphit ausgehend, die einzelnen karbidbildenden Lagen durch Diffusion von Kohlenstoff durch die jeweils angrenzenden Lagen aus einem kein Karbid bildenden Metall nacheinander zum Karbid umgewandelt werden. Das heißt, eine Weiterdiffusion von Kohlenstoff durch eine Lage aus einem kein Karbid bildenden Metall in eine vom Graphit entfernter liegende karbidbildende Lage wird erst dann einsetzen, und zwar mit entsprechend reduzierter Wachstumsrate, wenn die näher am Graphit liegende, karbidbildende Lage im wesentlichen vollständig zum stöchiometrischen Karbid umgewandelt worden ist. Bei Auftreten von Metall-Kohlenstoff-Verbindungen mit unterschiedlichem Atomverhältnis (z. B. Me₃C, Me₂C, MeC, MeC₂) werden wiederum die einzelnen Karburierungsstufen durch die nicht karbidbildenden Zwischenlagen räumlich klar getrennt, vom Graphit ausgehend zeitlich hintereinander durchlaufen.

Als kein Karbid bildendes Metall ist insbesondere Rhenium und Platin geeignet, während für das karbidbildende Metall Wolfram, Tantal, Hafnium und Niob gut geeignet sind.

Eine für viele Fälle ausreichende Sperrwirkung der Kohlenstoff-Diffusion ergibt sich schon bei einem Aufbau der Zwischenschicht mit zwei Doppellagen mit jeweils einer Lage aus karbidbildendem Metall bzw. dessen Karbid und einer Lage aus dem kein Karbid bildenden Metall. Bei einem derartigen Schichtaufbau ist es zwingend, daß die Doppellagen vollständig aufgebracht werden, wodurch erreicht wird, daß die Lagen aus karbidbildendem Metall bzw. dessen Karbid jeweils zwischen zwei Lagen aus einem kein Karbid bildenden Metall, angeordnet sind. Für einen derartigen Verbundkörper hat sich insbesondere eine Zwischenschicht mit der Schichtfolge Rhenium -- Wolfram bzw. Wolframkarbid -- Rhenium -- Wolfram bzw. Wolframkarbid -- Rhenium vom Graphit ausgehend bewährt.

Als Verbundkörper, bei dem eine nochmals verbesserte Diffusionssperrwirkung erreicht wird, hat sich eine Ausführung bewährt, bei der die Zwischenschicht anschließend an die erste Lage sechs Doppellagen aufweist.

Für einen derartigen Verbundkörper hat sich eine Zwischenschicht mit der Folge - auf der Graphitseite beginnend Re -- W bzw. WC -- Re -- W bzw. WC -- Re -- W bzw. WC -- Re -- W bzw. WC -- Re -- W bzw. WC -- Re -- W bzw. WC -- wahlweise Re bewährt, wobei alle Einzellagen in etwa gleiche Schichtstärke aufweisen.
Wenn bei einem erfindungsgemäßen Aufbau der Zwischenschicht mehr als zwei Doppellagen angeordnet sind, kann bei der letzten Doppellage die Lage, die aus einem kein Karbid bildenden Metall besteht, entfallen.

Bei der Herstellung eines Verbundkörpers in Form einer Drehanode für Röntgenröhren mit einem Grundkörper aus Graphit und einer unmittelbar auf der Zwischenschicht aufgebrachten Brennbahn aus Wolfram oder einer Wolfram-Rhenium-Legierung ist es vorteilhaft, Zwischenschicht und Brennbahn mittels CVD- oder PVD-Verfahren aufzubringen wobei sie feinkörnige bzw. senkrecht zur Oberfläche feinstengelige struktur aufweisen. Die Gesamtschichtstärke der Zwischenschicht liegt dabei vorteilhafterweise zwischen 20µm und 70µm. Die Schichtstärke der Brennbahn liegt vorteilhafterweise zwischen 200µm und 400µm. Durch die hervorragende Diffusionssperrwirkung der Zwischenschicht ist es möglich, die Schichtdicke der Brennbahn ohne negative Auswirkungen auf ihre Lebensdauer im Unterschied zum Stand der Technik ganz wesentlich auf die genannten Werte abzusenken. Bei bisher bekannten Ausführungen von Drehanoden waren Brennbahnstärken in der Größenordnung von 750 - 1000µm notwendig. Durch die verminderte Brennbahnstärke wird eine größere mechanische Stabilität der Drehanoden in bezug auf katastrophales Versagen durch Spannungsrisse erreicht. Darüberhinaus ist eine kostengünstigere Herstellung möglich.

Besonders vorteilhaft ist es, wenn die jeweiligen Lagen der Zwischenschicht sehr feinkörnig bzw. feinstengelig mit einem mittleren Korndurchmesser <0,5µm, vorzugsweise <0,1µm, ausgeführt sind. Auf diese Art und Weise wird die Thermoschockbeständigkeit der Zwischenschicht sowie ihre Diffusionssperrwirkung noch weiter verbessert. Besonders gut läßt sich ein derartiges Gefüge der Zwischenschicht durch Abscheidung der Zwischenschicht mit Hilfe eines PVD-Verfahrens erreichen.

Bei einem Verbundkörper, bei dem nach einer besonderen Ausgestaltung der Erfindung ein massiver Graphitteil mit einem massiven Teil aus einer karbidbildenden hochschmelzenden Metallkomponente durch eine Lotschicht verbunden ist, ist das Lotmaterial wie Platin oder Zirkon zwischen der letzten Lage der Zwischenschicht und dem massiven Teil aus karbidbildendem hochschmelzenden Metall angeordnet. Der Verbundkörper wird dabei so hergestellt, daß der Graphit zuerst mit der Zwischenschicht beschichtet wird und daß dann auf die Zwischenschicht das Lot, z. B. in Form einer dünnen Folie, oder durch Abscheidung mit CVD- oder PVD-Verfahren aufgebracht wird. Nach dem Positionieren des massiven Teiles aus hochschmelzendem Metall auf dem Lot und Fixieren des Verbundes wird der Verbundkörper verlötet. Durch die Zwischenschicht wird sowohl eine nachteilige Karbidbildung in der Lotschicht als auch ein Entgasen des Graphits verhindert. Durch letzteres wird eine Lunkerbildung im Lot vermieden. Insbesondere kann bei derartigen Ausgestaltungen eines Verbundkörpers mit mehr als zwei Doppellagen die Lage der letzten Doppellage, die aus einem kein Karbid bildenden Metall besteht, entfallen.

Im folgenden wird die Erfindung an Hand von Beispielen näher erläutert.

### Beispiel 1

Zur Herstellung eines Verbundkörpers in Form einer Drehanode für Röntgenröhren mit einem Durchmesser von 100 mm und einem Wärmespeichervermögen von 600 kJ wurde auf einem entsprechenden scheibenförmigen Graphitgrundkörper mittels Kathodenzerstäubung von zwei Quellen eine Zwischenschicht mit der folgenden Schichtfolge abgeschieden:
10µm Re - 2µm W - 2µm Re - 2µm W - 2µm Re - 2µm W - 2µm Re - 2µm W - 2µm Re - 2µm W - 2µm Re - 2µm W - 8µm Re
Durch Ausnutzung des Ionenplattiereffektes wurden gut aufeinander bzw. auf dem Graphit haftende feinkörnige Lagen abgeschieden.
Der solchermaßen mit der Zwischenschicht versehene Graphitgrundkörper wurde nach einem Entspannungsglühen bei ca. 1200°C während 1 h, bei welchem bereits eine teilweise Karburierung der Wolframlagen der Zwischenschicht erfolgte, mittels CVD-Verfahren mit einem Wolfram-Brennbahnbelag von 400µm beschichtet. Anschließend wurde die Drehanode durch mechanische Bearbeitung in ihre Endform gebracht.
Durch eine abschließende Hochvakuumglühung bei einer Temperatur, die etwa der Temperatur entspricht, der die Zwischenschicht während des Einsatzes ausgesetzt ist (ca. 1200-1600°C), wurde die Zwischenschicht endgültig formiert, d. h. die Wolframlagen wurden teilweise zu Wolframkarbid karburiert.

### Beispiel 2

Zum Vergleich der erfindungsgemäß hergestellten Drehanode mit einer Drehanode nach dem Stand der Technik wurde eine Drehanode wie im Beispiel 1 hergestellt, jedoch mit dem Unterschied, daß die Zwischenschicht auf dem Graphit gemäß Stand der Technik wie folgt abgeschieden wurde:
15µm Rhenium - 15µm Rhenium mit 20 Mol.% Wolfram - 10µm Rhenium

Die nach den Beispielen 1 bis 2 hergestellten Drehanoden wurden in einem Prüfstand für Röntgenröhrendrehanoden getestet und miteinander verglichen.

Die einzelnen Drehanoden wurden dabei folgenden Belastungen unterworfen:
Röhrenspannung: 120 kV
Röhrenstrom: 500 mA
Schußdauer: 4 s; 100 s Pause
Dies entspricht einer Energiezufuhr von 240 kJ innerhalb von 4 Sekunden mit einer deutlich über die zu erwartenden Einsatzbedingungen hinausgehenden Belastung der Brennbahn.

Die nach Beispiel 1 erfindungsgemäß hergestellte Drehanode zeigte nach 10.000 Belastungszyklen eine geringfügige Aufrauhung der Brennbahn, die aber unter jener lag, welche für Drehanoden gleichen Wärmespeichervermögens aus einem pulvermetallurgisch hergestellten Grundkörper mit einer Molybdänlegierung und einer Wolfram-Brennbahn unter diesen Belastungsbedingungen beobachtet wird. Nach 25.000 Belastungszyklen arbeitete die Drehanode immer noch störungsfrei.

Eine anschließende elektronenmikroskopische Analyse der nach Beispiel 1 hergestellten Drehanode zeigte, daß die Brennbahn ein Netzwerk von feinen Mikrorissen, jedoch keine bis zur Zwischenschicht reichenden Risse und dementsprechend keinen Ansatz eines Ablösens der Brennbahn aufwies. Eine Untersuchung der Drehanode im Schliff zeigte, daß keine Karburierung der Brennbahn aufgetreten war.

Die gemäß Beispiel 2 nach dem Stand der Technik hergestellte Drehanode zeigte nach 10.000 Belastungszyklen bereits ein Netzwerk von groben Rissen im Brennbahnbelag. Nach 25.000 Belastungszyklen kam es zu großflächigen Ablösungen des Schichtverbundes vom Graphit. Der Test mußte abgebrochen werden.

### Beispiel 3

In diesem Beispiel wird der überraschende Effekt anschaulich dargestellt, welcher durch die erfindungsgemäße Ausgestaltung der Zwischenschicht mit einer mehrfachen Anordnung einer Lage eines karbidbildenden Metalles gegenüber einer Zwischenschicht nach dem Stand der Technik mit einer einzigen Lage eines karbidbildenden Metalles erreicht wird.

Eine Graphitscheibe mit den Abmessungen wie in den Beispielen 1 und 2 wurde mittels Kathodenzerstäubung von zwei Quellen mit einer 45µm starken Zwischenschicht mit der Schichtfolge 15µm Re - 15µm W - 15µm Re versehen. Dies entspricht einer Zwischenschicht mit einer Doppellage, wie sie nach dem Stand der Technik bekannt ist.

Eine zweite Graphitscheibe derselben Abmessungen wurde ebenfalls mit einer 45µm starken Zwischenschicht, aber mit der Schichtfolge 5µm Re - 5µm W - 5µm Re - 5µm W - 5µm Re - 5µm W - 5µm Re - 5µm W - 5µm Re versehen. Bei dieser Ausführung sind also vier Einzellagen des karbidbildenden Metalles Wolfram aufgebracht, entspricht also einer erfindungsgemäßen Zwischenschicht mit vier Doppellagen.

Beide Graphitscheiben wurden nach Aufbringung der Zwischenschicht ebenfalls durch Kathodenzerstäubung mit einer 200µm starken Wolframschicht versehen.

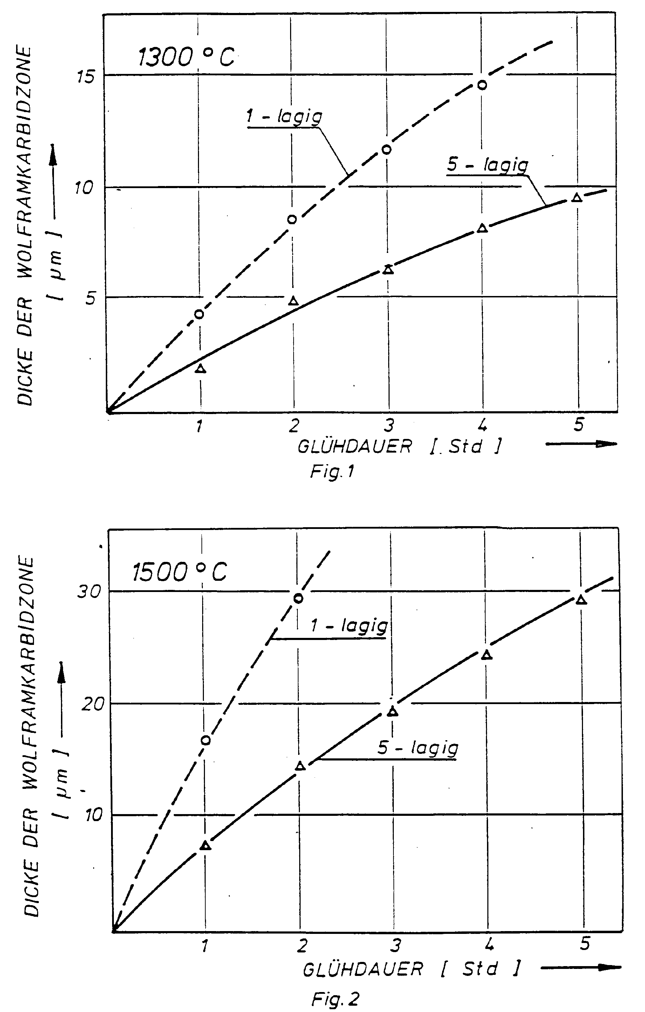

Die derartig beschichteten Graphitscheiben wurden Hochtemperatur-Glühtests im Vakuum unterzogen, wobei das Temperatur/Zeit-Profil von 1200°C/1 h auf 1660°C/5 h in Temperaturschritten von 100°C und Zeitschritten von 1 h erhöht wurde. Unter diesen Bedingungen entstand die durch C-Diffusion aus dem Graphit gebildete Wolframkarbidschicht aus W₂C und WC gleicher Dicke (bezogen auf die Summe aller Wolframlagen) bei der Ausführung mit vier Doppellagen erst zu einem wesentlich späteren Zeitpunkt als bei der Ausführung mit einer Doppellage. Dies ist in Figur 1 und 2 anhand der Glühtemperaturen von 1300°C und 1500°C dargestellt.

Aufgrund dieser Darstellungen läßt sich auch erkennen, daß bei den im Betrieb einer Drehanode auftretenden Temperaturen von etwa 1300°C in der Zwischenschicht bei Anwendung einer Zwischenschicht mit vier Doppellagen eine Karburierung der Brennbahn völlig verhindert werden kann.

Ein weiterer Vorteil der erfindungsgemäßen Ausführung mit vier Doppellagen liegt in der verbesserten mechanischen Festigkeit des Verbundkörpers aufgrund einer verbesserten Duktilität, die sich im Biegebruchversuch durch einen größeren Biegewinkel der mit vier Doppellagen beschichteten Graphitprobe im Vergleich zur oben beschriebenen Ausführung nach dem Stand der Technik manifestiert.

## Patentansprüche

1. Verbundkörper aus Graphit, aus einer karbidbildenden hochschmelzenden Metallkomponente und aus einer mehrlagigen Zwischenschicht, wobei die an den Graphit angrenzende erste Lage der Zwischenschicht aus einem kein Karbid bildenden Metall oder dessen Legierungen besteht,
**dadurch gekennzeichnet,**
daß anschließend an die erste Lage mindestens zwei Doppellagen angeordnet sind, wobei eine Doppellage aus einer Lage aus einem oder mehreren karbidbildenden Metallen bzw. aus deren Karbiden oder Mischkarbiden und einer Lage aus einem kein Karbid bildenden Metall oder dessen Legierungen, besteht, und die Lagen aus einem kein Karbid bildenden Metall oder dessen Legierungen und aus einem oder mehreren Karbid bildenden Metallen bzw. deren Karbiden oder Mischkarbiden abwechselnd angeordnet sind.

2. Verbundkörper nach Anspruch 1, dadurch gekennzeichnet, daß die kein Karbid bildenden Metalle Rhenium oder Platin sind.

3. Verbundkörper nach Anspruch 1 oder 2, dadurch gekennzeichnet, daß die karbidbildenden Metalle Wolfram, Tantal, Hafnium oder Niob sind.

4. Verbundkörper nach Anspruch 1, dadurch gekennzeichnet, daß die Zwischenschicht ausgehend vom Graphit die Folge Rhenium -- Wolfram bzw. Wolframkarbid -- Rhenium -- Wolfram bzw. Wolframkarbid -- Rhenium aufweist.

5. Verbundkörper nach Anspruch 1, dadurch gekennzeichnet, daß die Zwischenschicht eine erste Lage aus Rhenium und sechs Doppellagen aus Wolfram bzw. Wolframkarbid und Rhenium aufweist, wobei die Schichtstärken der einzelnen Lagen aus Rhenium und Wolfram bzw. Wolframkarbid in etwa gleiche Schichtdicken aufweisen und wobei die letzte Rhenium-Lage wahlweise entfallen kann.

6. Verbundkörper in Form einer Drehanode für Röntgenröhren mit einem Grundkörper aus Graphit und einer unmittelbar auf der Zwischenschicht aufgebrachten Brennbahn aus Wolfram oder einer Wolfram-Rhenium-Legierung nach Anspruch 4 oder 5, dadurch gekennzeichnet, daß Zwischenschicht und Brennbahn eine durch Abscheidung mittels CVD- oder PVD-Verfahren erreichte feinkörnige bzw. senkrecht zur Oberfläche feinstengelige Struktur aufweisen, wobei die Gesamtschichtstärke der Zwischenschicht 20µm - 70µm und die Dicke der Brennbahn 200µm - 400µm beträgt.

7. Verbundkörper nach einem der Ansprüche 1 - 6, dadurch gekennzeichnet, daß die jeweiligen Lagen der Zwischenschicht sehr feinkörnig bzw. feinstengelig mit einem mittleren Korndurchmesser <0,5µm, vorzugsweise < 0,1µm, ausgeführt sind.

8. Verbundkörper nach einem der Ansprüche 1 - 5, dadurch gekennzeichnet, daß dieser zwischen hochschmelzender Metallkomponente und Zwischenschicht eine Lotschicht aufweist.

9. Verbundkörper nach Anspruch 8, dadurch gekennzeichnet, daß das Lot Platin oder Zirkon ist.

## Claims

1. A composite body comprising a graphite body, a carbide forming high-melting metal component and a multi-layered intermediate layer, whereby the first layer of the intermediate layer bordering on the graphite body consists of a non-carbide forming metal or an alloy thereof,
characterized in that
at least two double layers are arranged adjacent to the first layer, whereby each double layer consists of a first layer of one or more carbide-forming metals resp. of the carbides or mixed carbides thereof and of a second layer of a non-carbide forming metal or an alloy thereof and that the layers of a non-carbide forming metal or an alloy thereof and of one or more carbide-forming metals resp. of the carbides or mixed carbides thereof are arranged alternatingly.

2. A composite body according to claim 1 characterized in that the non-carbide forming metals are rhenium or platinum.

3. A composite body according to claim 1 or 3 characterized in that the carbide -forming metals are tungsten, tantalum, hafnium or niobium.

4. A composite body according to claim 1 characterized in that the intermediate layer starting from said graphite body has the sequence rhenium -- tungsten resp. tungsten carbide -- rhenium--tungsten resp. tungsten carbide -- rhenium.

5. A composite body according to claim 1 characterized in that the intermediate layer has a first layer of rhenium and six double layers of tungsten resp. tungsten carbide and rhenium, whereby the individual layers of rhenium and tungsten resp. tungsten carbide have substantially the same thickness and whereby optionally the last rhenium layer can be omitted.

6. A composite body in the form of a rotary anode for x-ray tubes comprising a graphite body and a focal track of tungsten or a tungsten rhenium alloy applied directly to said intermediate layer according to claim 4 or 5 characterized in that said intermediate layer and said focal track have a finely granular resp. finely stalked structure perpendicular to the surface obtained by a CVD or PVD process, whereby the overall thickness of the intermediate layer is in the range of 20 µm to 70 µm and the thickness of the focal track is in the range of 200µm to 400µm.

7. A composite body according to one of the claims 1 to 6 characterized in that the individual layers of said intermediate layer have a finely granular resp. finely stalked structure with an average grain diameter of < 0,5µm, preferably of < 0,1µm.

8. A composite body according to one of the claims 1 to 5 characterized in that said composite body has a solder layer between the high-melting metal component and the intermediate layer.

9. A composite body according to claim 8 characterized in that the solder is platinum or zirconium.

## Revendications

1. Corps composite, composé de graphite, d'une composante métallique à haut point de fusion constituant un carbure et d'une couche intermédiaire à plusieurs strates, la première strate adjacente au graphite de la couche intermédiaire se composant d'un métal ne formant pas de carbure, ou de ses alliages,
caractérisé en ce que
deux doubles strates au moins sont disposées adjacentes à la première strate, une double strate étant composée d'une strate d'un ou plusieurs métaux formant des carbures ou de leurs carbures ou carbures mélangés, et d'une strate d'un métal ne formant aucun carbure ou de ses alliages, et les strates d'un métal ne formant aucun carbure ou de ses alliages et les strates d'un ou plusieurs métaux formant des carbures ou de leurs carbures ou carbures mélangés étant disposées en alternance;

2. Corps composite selon la revendication 1, caractérisé en ce que les métaux ne formant aucun carbure sont le rhénium ou le platine.

3. Corps composite selon la revendication 1 ou 2, caractérisé en ce que les métaux formant des carbures sont le tungstène, le tantale, l'hafnium ou le niobium.

4. Corps composite selon la revendication 1, caractérisé en ce que la couche intermédiaire comprend, en partant du graphite, la séquence rhénium - tungstène - ou carbure de tungstène - rhénium - tungstène ou carbure de tungstène - rhénium.

5. Corps composite selon la revendication 1 caractérisé en ce que la couche intermédiaire comprend une première strate en rhénium et six doubles strates en tungstène ou en carbure de tungstène et en rhénium, les épaisseurs de couche des différentes strates de rhénium et de tungstène ou de carbure de tungstène étant à peu près égales et la dernière couche de rhénium pouvant au choix être omise.

6. Corps composite en forme d'anode tournante pour tubes à rayons X comprenant un corps de base en graphite et une bande émettrice en tungstène ou en un alliage de tungstène et de rhénium appliquée immédiatement sur la couche intermédiaire, selon la revendication 4 ou 5, caractérisé en ce que la couche intermédiaire et la bande émettrice comportent une structure à grains fins ou à fines colonnes perpendiculaires à la surface, réalisée par dépôt au moyen d'un procédé de dépôt chimique en phase vapeur, ou CVD, ou de dépôt physique en phase vapeur, ou PVD, l'épaisseur totale de couche de la couche intermédiaire étant comprise entre 20 µm et 70 µm et l'épaisseur de la bande émettrice étant comprise entre 200 µm et 400 µm.

7. Corps composite selon l'une des revendications 1 à 6, caractérisé en ce que les diverses strates de la couche intermédiaire sont réalisées en grains très fins ou en colonnes très fines dont le diamètre moyen de grain est de préférence < 0,5 µm, de préférence < 0,1 µm.

8. Corps composite selon l'une des revendications 1 à 5, caractérisée en ce que celui-ci comporte une couche de brasure entre les composants métalliques à hauts points de fusion et la couche intermédiaire.

9. Corps composite selon la revendication 8, caractérisé en ce que la brasure consiste en platine ou en zirconium.
